# EUROPEAN PATENT SPECIFICATION

(11) **EP 1 261 088 B1**
(45) Date of publication and mention of the grant of the patent: **11.01.2012**
(21) Application number: 02010565.6
(22) Date of filing: 10.05.2002
(51) Int. Cl.: H02B 1/30

(54) **Cabinet for distributing electric power and for dispensing water**
Kasten zur Energie- und Wasserverteilung
Armoire pour la distribution de puissance électrique et d'eau

(30) Priority: 22.05.2001 IT MI20011065
(43) Date of publication of application: 27.11.2002
(73) Proprietor: GEWISS S.p.A., I-24069 Cenate Sotto (Bergamo) (IT)
(72) Inventor: Bosatelli, Domenico, 24069 Cenate Sotto (IT)
(74) Representative: Forattini, Amelia

(56) References cited:
- WO-A-92/13242
- GB-A- 2 052 878

## Description

The present invention relates to a cabinet for distributing electric power and for dispensing water. (See WO-A-92 132 42).

More particularly, the invention relates to cabinets used for distributing electric power and water in public areas.

These cabinets can be used in areas of public interest where users require temporary electrical and/or water connections, particularly camping sites, marinas, during exhibitions and local markets, sports or cultural events, and in areas used as parking grounds, garages, et cetera.

Currently, cabinets according to the prior art are made of painted plastics, typically thermosetting polyester, and are substantially constituted by panels screwed together. Some cabinets are protected by doors that can be closed even after connecting the power supply cables, but in many cases no protection is provided, causing problems in terms of unauthorized access to the utilities.

Another problem of the cabinets of the prior art is their insufficient toughness and low resistance to impacts. Vehicles moving in the camping site, for example, may easily damage the cabinets.

Moreover, the connection to the prior art cabinets is often awkward and troublesome, especially in view of the fact that the connection is sometimes performed in adverse weather conditions: rain, wind, darkness, et cetera.

An aim of the present invention is to provide a cabinet for distributing electric power and for dispensing water that overcomes the drawbacks of the cited prior art.

An object of the invention is to provide a cabinet for distributing electric power and for dispensing water that is particularly resistant to impacts and to atmospheric agents.

Another object is to provide a cabinet for distributing electric power and for dispensing water that allows rapid and easy connection in any environmental condition.

Another object is to provide a cabinet for distributing electric power and for dispensing water that is advantageous from the point of view of production.

An important object of the invention is to provide a cabinet for distributing electric power and for dispensing water that is versatile and modular, so that it can be easily and economically produced in various configurations according to specific requirements.

This aim and these and other objects that will become better apparent hereinafter are achieved by a cabinet for distributing electric power and for dispensing water, as claimed in the appended claims.

Further characteristics and advantages of the present invention will become better apparent from the description of preferred but not exclusive embodiments thereof, illustrated only by way of non-limitative example in the accompanying drawings, wherein:
Figure 1 is a perspective view of a cabinet according to the invention, in a low-height configuration;
Figure 2 is an exploded perspective view of the cabinet of Figure 1;
Figure 3 is an exploded perspective view of the cabinet according to the invention, in a tall configuration;

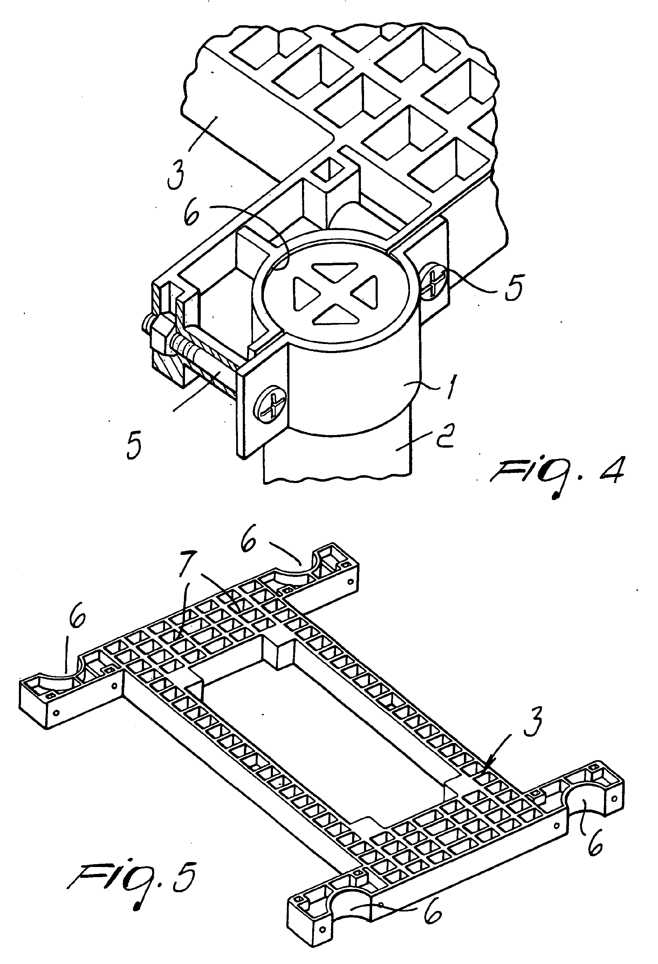

Figure 4 is an enlarged-scale perspective view of the detail of the connection between the uprights and the cross-members;
Figure 5 is a perspective view of a cross-member;

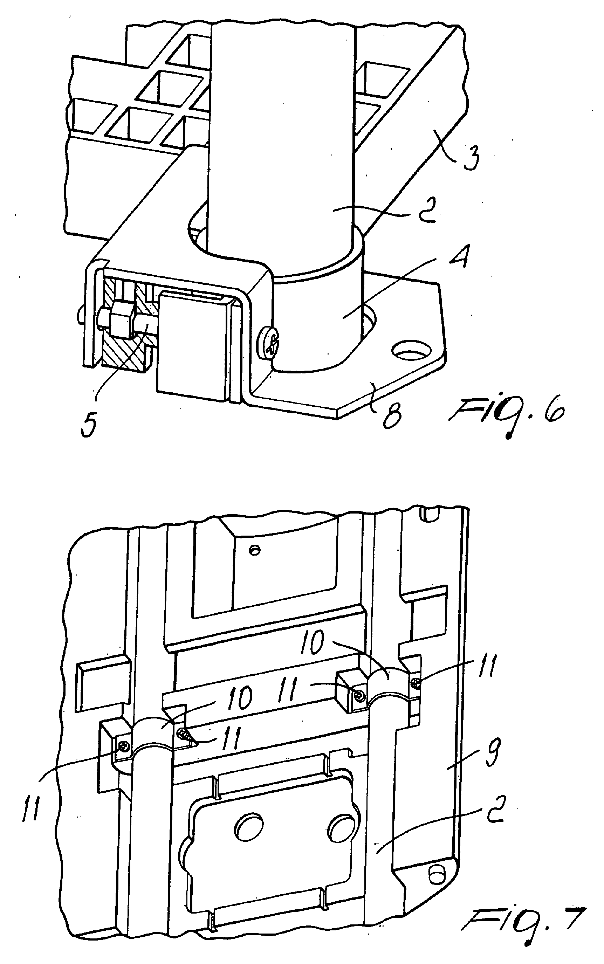

Figure 6 is an enlarged-scale perspective view of the detail of the connection to the floor;
Figure 7 is an enlarged-scale perspective view of the detail of the connection between the uprights and the lateral panels;
Figure 8 is an enlarged-scale perspective view of the detail of the passage of the cables.

With reference to the above cited figures, the cabinet according to the invention, generally designated by the reference numeral 1, comprises a tubular structure constituted by four vertical uprights 2 connected by cross-members 3.

The vertical uprights are preferably constituted by plastic tubes and the cross-members are also made of plastics and have reinforcement ridges 7 which make them particularly resistant to stresses.

The cross-members 3 are fastened to the uprights 2 by means of collars 4, which are constituted by contoured plates which are fixed to each cross-member by means of screws 5, or other fastening devices, at respective seats 6 for the uprights 2.

The structure can be fastened to the floor by means of brackets 8, which can be fastened at the seats 6 and at the fastening collars 4 of the uprights.

The structure further includes lateral panels 9, which are also fastened by means of collars 10 and screws 11 to the uprights 2, an upper panel 12, a footing 13, and a horizontal partition 14 arranged at one of the cross-members in an intermediate position inside the structure.

The partition 14 separates an electrical module 15, contained in an upper region inside the structure, from the water dispensing devices contained in a lower region, which include external faucets 16.

The electrical module 15 comprises a supporting frame, and modular panels are mounted thereon. The panels comprise all the various types of interlocked outlets and the modular panels that accommodate the circuit breakers. The electrical module 15 ensures a protection rating compliant with the standards (IP55), regardless of the mounting of the shell constituted by the external panels.

The shell provides the electrical module 15 with a high protection against impacts, and for this purpose the panels and the other external members of the structure are produced by using appropriate production technologies and materials with high-level technical characteristics as regards low weight, elasticity and mechanical strength.

A front panel 17 closes the lower compartment of the water dispensing devices, while a door 18 is provided for the upper compartment.

The door 18, conveniently provided with a lock in order to prevent unauthorized access to the electrical module 15, can be closed even when the cabinet is being used, because cables 19 can exit through passages 20 formed in the partition 14.

It is also possible to open the door at 90° with respect to the front plane of the structure and then insert it in a lateral compartment provided between the electrical module and the lateral outer panel, so that the door 18 retracts completely.

The retractable door 18 is particularly useful because it allows to provide the connections to the cabinet without encumbering the work area, as instead occurs with conventional cabinet doors.

The cabinet also comprises a lighting system, constituted by two lamps arranged in an upper part 25 of the door and adapted to illuminate the passage directly in front of the cabinet, the outer door in order to be able to open the door even with a key, and the inside of the cabinet in order to be able to access the outlets and therefore use the utilities.

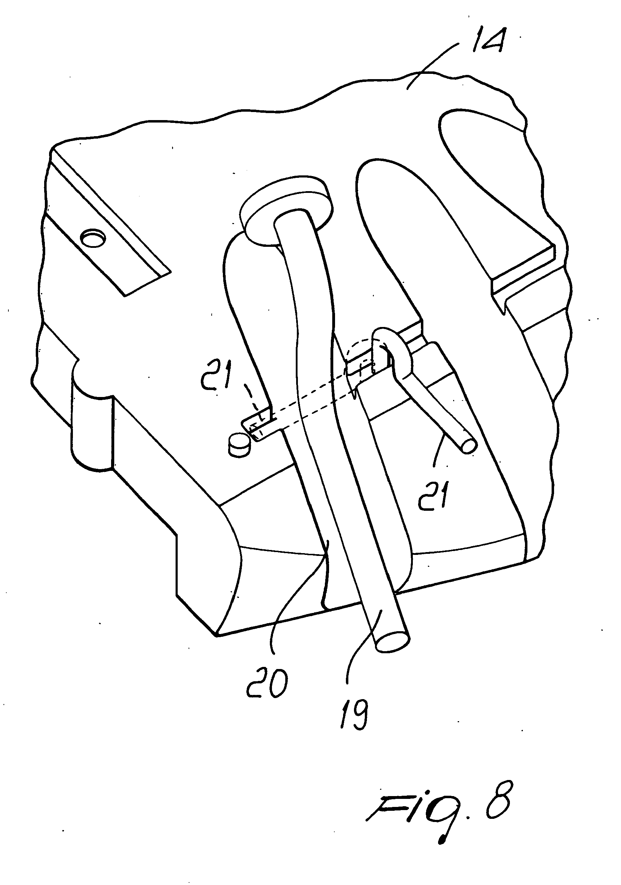

Once connection to the outlets has been provided, the cables 19 can be locked by means of retainers 21, shown schematically in Figure 8, so as to protect the outlet and the door, if it is closed during use, against any violent impact applied to the cable.

The cabinet 1, according to the invention, can be provided in various configurations so as to meet various requirements; two of those configurations are shown in the figures.

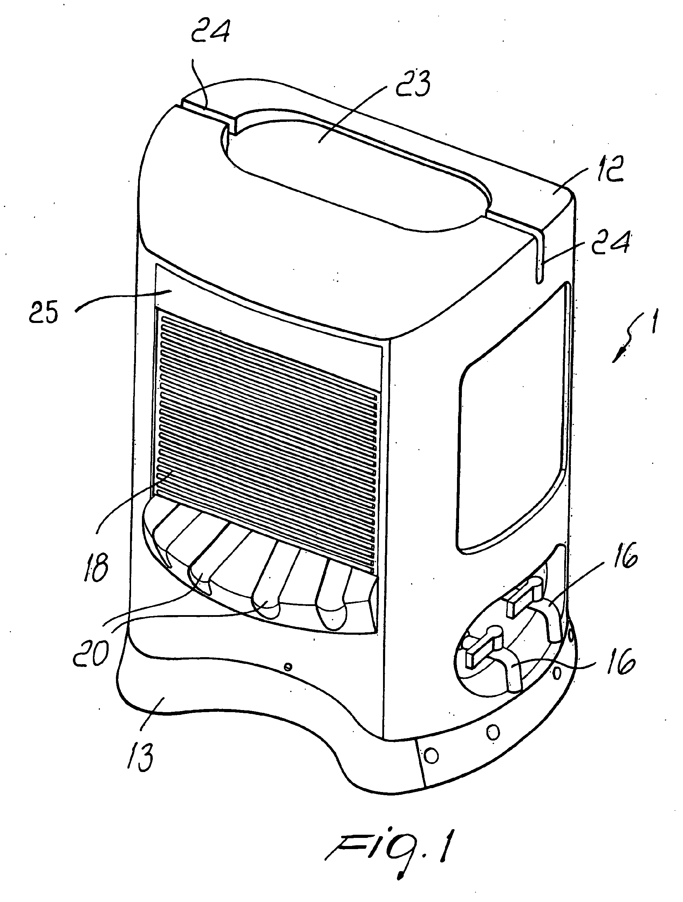

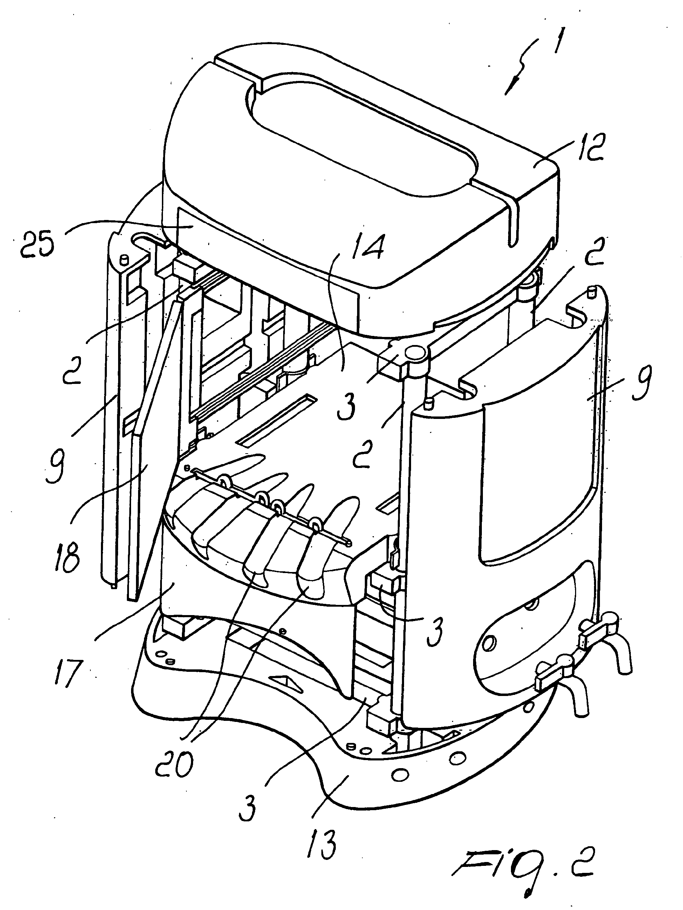

Figures 1 and 2 illustrate a configuration particularly useful in marinas and having a low-height structure 1 provided with the outlets for the utilities, constituted by the electrical outlets 15, only on one side, which is protected by the retractable door, while on the opposite side there is a transparent flap for accommodating the circuit breakers for protecting the outlets.

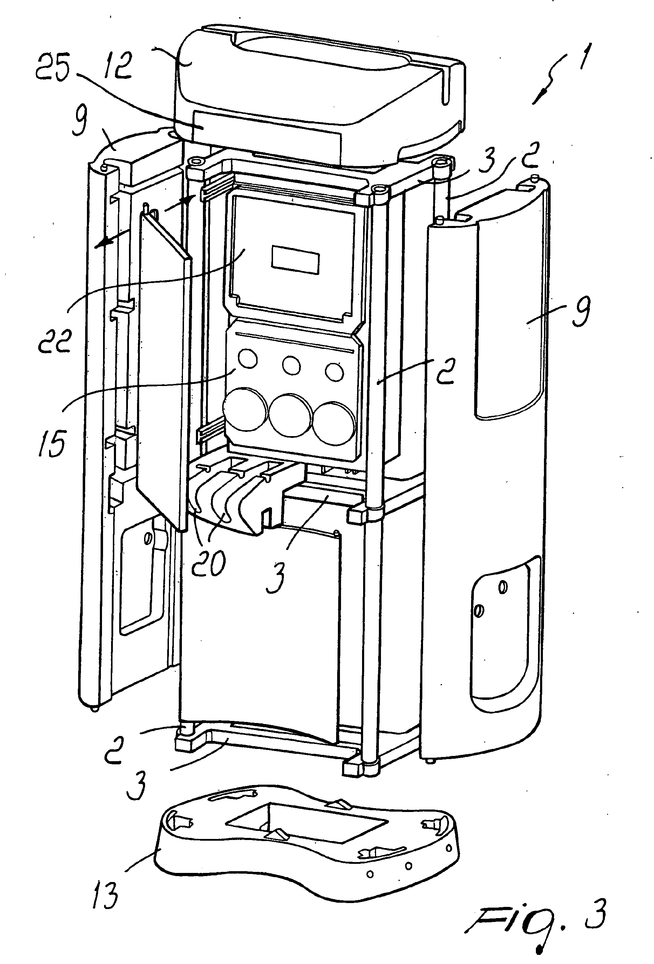

In a configuration for camping sites, shown in Figure 3, the structure 1 is tall and the utility outlet is provided on the front and on the back, both of which have the retractable door described above. In this configuration, a transparent flap 22 for accommodating the circuit breakers is provided above the utility compartment.

The reduced height, in the configuration for marinas, helps to conceal the cabinet, while when the cabinet is used in camping sites the height of the cabinet helps to make it more conspicuous, in order to limit the danger of impacts during maneuvers of campers and cars.

According to the invention, other configurations dictated by specific requirements are possible by interchanging the flanges on the electrical module or by making the module slide in terms of depth and placing it where required.

Another characteristic of the cabinet according to the invention is constituted by the rounded shapes of the outer panels, so as to avoid parts that protrude or may catch, reducing the possibility of impacts that might damage the cabinet or the user.

The cover also comprises a compartment or recess 23, provided with drains for rainwater, and useful to support the small items, such as keys, tools, et cetera, that usually encumber the user's hands while performing the connection.

Another advantage of the cabinet according to the invention is that when the cabinet is fixed to the floor it is possible to choose the side on which the outlets are to be placed, because the cross-section of the cabinet is inscribed within a circle.

In practice it has been observed that the invention achieves the intended aim and objects, a cabinet for distributing electric power and for dispensing water having been provided which is versatile and has superior characteristics in terms of functionality and mechanical strength.

As clearly shown by the description, the cabinet according to the invention has been provided so as to take into account all manufacturing and functional aspects, according to the various requirements of the specific uses to which it can be assigned.

The basic structure gives the cabinet superior mechanical strength characteristics and at the same time great versatility, since it is possible to use many identical components for the various configurations.

The cabinet according to the invention is susceptible of numerous modifications and variations, within the scope of the appended claims. All the details may be replaced with technically equivalent elements.

The materials used, as well as the dimensions, may of course be any according to requirements and to the state of the art.

## Claims

1. A cabinet for distributing electric power and for dispensing water, comprising a structure for supporting and containing at least one electrical module (15) for distributing electric power and at least one device for dispensing water, **characterized in that** said structure comprises uprights (2) associated with cross-members (3) adapted to support said electrical module (15) and said water dispensing device and containment panels (9).

2. The cabinet according to claim 1, **characterized in that** said tubular structure comprises four uprights (2), constituted by plastic tubes, and **in that** the cross-members (3) are also made of plastics and have reinforcement ridges.

3. The cabinet according to claim 1 or 2, **characterized in that** said cross-members (3) are fastened to said uprights (2) by means of collars (4) constituted by contoured plates that are fastened to fach cross-member (3) by means of screws (5) or other fastening devices at respective seats (6) for the uprights (2).

4. The cabinet according to one or more of the preceding claims, **characterized in that** said structure can be fastened to the floor by means of brackets (8) that are associable with the structure at said seats (6) and at said uprignt fastening collars (4).

5. The cabinet according to one or more of the preceding claims, **characterized in that** said panels comprise lateral panels (9), which are fastened by means of collars (10) and screws (11) to the uprights (2), an upper panel (12), a footing (13) and a horizontal partition (14) arranged at one of the cross-members (3) in an intermediate position inside the structure.

6. The cabinet according to one or module (15), of the preceding claims, **characterized in that** said partition (14) separates the electrical module (15), contained in an upper region inside the structure, from the water dispensing device that is contained in a lower region and comprises external faucets (16).

7. The cabinet according to one or more of the preceding claims, **characterized in that** said electrical module (15) comprises a supporting frame, modular panels that comprise various types of interlocked outlets, and modular panels provided with circuit breakers, said electrical module (15) having a protection rating compliant with the standards independently of the mounting of the shell constituted by the outer panels.

8. The cabinet according to one or more of the preceding claims, **characterized in that** it comprises a front panel (17) adapted to close the lower compartment of the water dispensing device, while a door (18) is provided for the upper compartment.

9. The cabinet according to one or more of the preceding claims, **characterized in that** said door (18) can be closed even when the cabinet is being used, since the cables (19) can exit through cable passages (20) formed in the partition (14).

10. The cabinet according to one or more of the preceding claims, **characterized in that** said door (18) is retractable.

11. The cabinet according to one or more of the preceding claims, **characterized in that** said door (18) can be opened at 90° with respect to the front plane of the structure and can be then inserted in a lateral compartment provided between the electrical module (15) and the lateral outer panel, (9) so that said door (18) retracts completely.

12. The cabinet according to one or more of the preceding claims, **characterized in**
**that** said cables (19) can be locked by means of retainers (21), so as to protect the outlet and the door (18), if the door is dosed during use, against a violent impact applied to the cable (19).

13. The cabinet according to one or more of the preceding claims, **characterized in that** said cover comprises a compartment or recess (23) provided with drains for rainwater and useful for resting objects thereon.

14. The cabinet according to one or more of the preceding claims, **characterized in that** it comprises a lighting system constituted by two lamps arranged in the upper part (25) of the door and adapted to illuminate the passage directly in front of the cabinet, the outer door in order to be able to maneuver the door opening system even with a key, and the inside of the cabinet in order to be able to access the outlets and therefore use the utilities.

15. The cabinet according to one or more of the preceding claims, **characterized in that** when the cabinet is fixed to the floor it is possible to choose the side on which to arrange the outlets, since the cross-section of the cabinet is inscribed in a circle.

## Patentansprüche

1. Kasten zum Verteilen von elektrischer Leistung und zum spenden von Wasser, der eine Konstruktion zum Abstützen und Unterbringen von mindestens einem elektrischen Modul (15) zum Verteilen von elektrischer Leistung und von mindestens einer Vorrichtung zum Spenden von Wasser umfasst, **dadurch gekennzeichnet, dass** die Konstruktion Ständer (2) mit zugeordneten Querelementen (3) umfasst, die so ausgebildet sind, dass sie das elektrische Modul (15) und die wasserspendende Vorrichtung sowie Verkleidungstafeln (9) abstützen.

2. Kasten nach Anspruch 1, **dadurch gekennzeichnet, dass** die Rohrkonstruktion vier Ständer (2) in Form von Kunststoffrohren umfasst und dass die Querelemente (3) ebenfalls aus Kunststoff bestehen und Verstärkungsränder aufweisen.

3. Kasten nach Anspruch 1 oder 2, **dadurch gekennzeichnet, dass** die Querelemente (3) an den Ständern (2) mittels Kragen (4) in Form von konturierten Platten befestigt sind, die an jedem Querelement (3) mittels Schrauben (5) oder anderer Befestigungsvorrichtungen an jeweiligen Sitzen (6) für die Ständer (2) befestigt sind.

4. Kasten nach einem oder mehreren der vorstehend aufgeführten Ansprüche, **dadurch gekennzeichnet, dass** die Konstruktion am Fußboden mittels Konsolen (8) befestigt werden kann, die der Konstruktion an den Sitzen (6) und an den Ständerbefestigungskragen (4) zugeordnet werden können.

5. Kasten nach einem oder mehreren der vorstehend aufgeführten Ansprüche, **dadurch gekennzeichnet, dass** die Tafeln seitliche Tafeln (9), die mittels Kragen (10) und Schrauben (11) an den Ständern (2) befestigt sind, eine obere Tafel (12) sowie eine Basis (13) und eine horizontale Trennwand (14) umfassen, die an einem der Querelemente (3) in einer Zwischenposition im Innern der Konstruktion angeordnet ist.

6. Kasten nach einem oder mehreren der vorstehend aufgeführten Ansprüche, **dadurch gekennzeichnet, dass** die Trennwand (14) das elektrische Modul (15), das sich in einem oberen Bereich im Innern der Konstruktion befindet, von der wasserspendenden Vorrichtung trennt, die sich in einem unteren Bereich befindet und externe Hähne (16) umfasst.

7. Kasten nach einem oder mehreren der vorstehend aufgeführten Ansprüche, **dadurch gekennzeichnet, dass** das elektrische Modul (15) einen Stützrahmen, Modultafeln, die verschiedene Ausführungen verriegelter Auslässe umfassen, sowie Modultafeln mit Leistungsschaltern umfasst, wobei das elektrische Modul (15), unabhängig von der Anbringung der durch die äußeren Tafeln gebildeten Ummantelung, eine standardmäßige Schutzklasse aufweist.

8. Kasten nach einem oder mehreren der vorstehend aufgeführten Ansprüche, **dadurch gekennzeichnet, dass** er eine vordere Tafel (17) umfasst, die so ausgeführt ist, dass das untere Fach der wasserspendenden Vorrichtung geschlossen ist, während für das obere Fach eine Tür (18) vorgesehen ist.

9. Kasten nach einem oder mehreren der vorstehend aufgeführten Ansprüche, **dadurch gekennzeichnet, dass** die Tür (18) selbst dann geschlossen werden kann, wenn der Schrank gerade benutzt wird, da die Kabel (19) durch in der Trennwand (14) ausgebildete Kabeldurchgänge (20) austreten können.

10. Kasten nach einem oder mehreren der vorstehend aufgeführten Ansprüche, **dadurch gekennzeichnet, dass** die Tür (18) aufklappbar ist.

11. Kasten nach einem oder mehreren der vorstehend aufgeführten Ansprüche, **dadurch gekennzeichnet, dass** die Tür (18) in einem Winkel von 90° im Verhältnis zur vorderen Ebene der Konstruktion geöffnet und dann in ein seitliches Fach bewegt werden kann, das zwischen dem elektrischen Modul (15) und der seitlichen äußeren Tafel (9) vorgesehen ist, so dass sich die Tür (18) vollständig aufklappen lässt.

12. Kasten nach einem oder mehreren der vorstehend aufgeführten Ansprüche, **dadurch gekennzeichnet, dass** die Kabel (19) mittels Halterungen (21) arretiert werden können, um so den Auslass und die Tür (18), wenn die Tür während des Gebrauchs geschlossen wird, vor einer auf das Kabel (19) einwirkenden heftigen mechanischen Beanspruchung zu schützen.

13. Kasten nach einem oder mehreren der vorstehend aufgeführten Ansprüche, **dadurch gekennzeichnet, dass** die Abdeckung ein Fach oder einen Rücksprung (23) umfasst, das bzw. der mit Abläufen für Regenwasser ausgestattet ist und genutzt werden kann, um Gegenstände darauf abzulegen.

14. Kasten nach einem oder mehreren der vorstehend aufgeführten Ansprüche, **dadurch gekennzeichnet, dass** er ein Beleuchtungssystem in Form von zwei Lampen umfasst, die im oberen Teil (25) der Tür angeordnet und so ausgeführt sind, dass der direkt vor dem Schrank befindliche Bereich, die äußere Tür, damit das Türöffnungssystem selbst mit einem Schlüssel gut betätigt werden kann, sowie das Innere des Schranks beleuchtet werden, um Zugang zu den Auslässen zu bekommen und daher die Medien nutzen zu können.

15. Kasten nach einem oder mehreren der vorstehend aufgeführten Ansprüche, **dadurch gekennzeichnet, dass** es, wenn der Schrank am Fußboden fixiert ist, möglich ist, die Seite zu wählen, an der die Auslässe angeordnet werden sollen, da der Querschnitt des Schranks von einem Kreis umschrieben ist.

## Revendications

1. Armoire destinée à la distribution de l'énergie électrique et de l'eau, comprenant une structure destinée à supporter et à contenir au moins un module électrique (15) destiné à distribuer l'énergie électrique et au moins un dispositif destiné à distribuer l'eau, **caractérisé en ce que** ladite structure comprend des montants (2) associés à des traverses (3) adaptées de façon à supporter ledit module électrique (15) et ledit dispositif de distribution d'eau et des panneaux de confinement (9).

2. Armoire selon la revendication 1, **caractérisée en ce que** ladite structure tubulaire comprend quatre montants (2), constitués par des tubes en matière plastique, et **en ce que** les traverses (3) sont également réalisées en matière plastique et présentent des saillies de renfort.

3. Armoire selon la revendication 1 ou la revendication 2, **caractérisée en ce que** lesdites traverses (3) sont fixées auxdits montants (2) à l'aide de colliers (4) constitués par des plaques en forme qui sont fixées à chaque traverse (3) à l'aide de vis (5) ou d'autres dispositifs de fixation au niveau de sièges respectifs (6) des montants (2).

4. Armoire selon l'une quelconque des revendications précédentes, **caractérisée en ce que** ladite structure peut être fixée au plancher à l'aide de supports (8) qui peuvent être associés à la structure au niveau desdits sièges (6) et au niveau desdits colliers (4) de fixation de montant.

5. Armoire selon l'une quelconque des revendications précédentes, **caractérisée en ce que** lesdits panneaux comprennent des panneaux latéraux (9), qui sont fixés à l'aide de colliers (10) et de vis (11) aux montants (2), un panneau supérieur (12), un pied (13) et une cloison horizontale (14) agencée au niveau de l'une des traverses (3) dans une position intermédiaire à l'intérieur de la structure.

6. Armoire selon l'une quelconque des revendications précédentes, **caractérisée en ce que** ladite cloison (14) sépare le module électrique (15), contenu dans une région supérieure à l'intérieur de la structure, du dispositif de distribution de l'eau qui est contenu dans une région inférieure et qui comprend des robinets extérieurs (16).

7. Armoire selon l'une quelconque des revendications précédentes, **caractérisée en ce que** ledit module électrique (15) comprend une armature de support, des panneaux modulaires qui comprennent divers types de sorties verrouillées réciproquement, et des panneaux modulaires dotés de disjoncteurs, ledit module électrique (15) présentant des caractéristiques de protection qui sont conformes aux normes indépendamment du montage de l'enveloppe constituée par les panneaux extérieurs.

8. Armoire selon l'une quelconque des revendications précédentes, **caractérisée en ce qu'**elle comprend un panneau avant (17) adapté de façon à fermer le compartiment inférieur du dispositif de distribution de l'eau, tandis qu'une porte (18) est prévue pour le compartiment supérieur.

9. Armoire selon l'une quelconque des revendications précédentes, **caractérisée en ce que** ladite porte (18) peut être fermée même lorsque l'armoire est utilisée, étant donné que les câbles (19) peuvent sortir à travers des passages de câbles (20) formés dans la cloison (14).

10. Armoire selon l'une quelconque des revendications précédentes, **caractérisée en ce que** ladite porte (18) est escamotable.

11. Armoire selon l'une quelconque des revendications précédentes, **caractérisée en ce que** ladite porte (18) peut être ouverte à 90° par rapport au plan avant de la structure et peut alors être insérée dans un compartiment latéral prévu entre le module électrique (15) et le panneau extérieur latéral (9), de telle sorte que ladite porte (18) s'escamote complètement.

12. Armoire selon l'une quelconque des revendications précédentes, **caractérisée en ce que** lesdits câbles (19) peuvent être verrouillés au moyen de dispositifs de retenue (21), de façon à protéger la sortie et la porte (18), si la porte est fermée en cours d'utilisation, contre un choc violent infligé aux câbles (19).

13. Armoire selon l'une quelconque des revendications précédentes, **caractérisée en ce que** ledit couvercle comprend un compartiment ou un évidement (23) doté de drains pour l'eau de pluie et utile pour poser des objets dessus.

14. Armoire selon l'une quelconque des revendications précédentes, **caractérisée en ce qu'**elle comprend un système d'éclairage constitué par deux lampes agencées dans la partie supérieure (25) de la porte et adaptées de façon à éclairer le passage directement devant l'armoire, la porte extérieure de façon à pouvoir manoeuvrer le système d'ouverture de la porte même avec une clef, et l'intérieur de l'armoire de façon à pouvoir accéder aux sorties et donc utiliser les installations.

15. Armoire selon l'une quelconque des revendications précédentes, **caractérisée en ce qu'**il est possible, lorsque l'armoire est fixée sur le plancher, de choisir le côté sur lequel il convient d'agencer les sorties, étant donné que la section transversale de l'armoire est inscrite dans un cercle,
